Europäisches Patentamt

European Patent Office

Office européen des brevets

(19)

(11) **EP 1 396 558 A1**

(12) **EUROPEAN PATENT APPLICATION**

(43) Date of publication:
   **10.03.2004 Bulletin 2004/11**

(51) Int Cl.⁷: **C25B 15/00**, C25B 9/08,
   C25B 9/00, C25B 1/10,
   C25B 1/12, C25B 1/00,
   C25B 15/08, C02F 1/78

(21) Application number: **03010453.3**

(22) Date of filing: **09.05.2003**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority: **10.05.2002 US 379448 P
   13.09.2002 US 319549 P**

(71) Applicant: **Proton Energy Systems, Inc.
   Wallingford, CT 06492 (US)**

(72) Inventors:
   • **Zagaja, John**
     **East Granby, CT 06026 (US)**
   • **Spaner, Michael**
     **Deep River, CT 06417 (US)**
   • **Stockton, Elena**
     **Wallingford, CT 06492 (US)**
   • **Ghuwalewala, Tushar**
     **Wethersfield, CT 06109 (US)**
   • **Anderson, Everett**
     **Glastonbury, CT 06033-1492 (US)**
   • **Styche, Eric**
     **Manchester, CT 06040 (US)**
   • **Tomasco, Allan**
     **Southington, CT 06489 (US)**
   • **Dristy, Mark E.**
     **Kutztown, PA 19530 (US)**
   • **Moulthrop, Lawrence C.**
     **Windsor, CT 06095 (US)**

(74) Representative: **Stenger, Watzke & Ring
   Patentanwälte
   Kaiser-Friedrich-Ring 70
   40547 Düsseldorf (DE)**

(54) **Anode/cathode feed high pressure electrolysis system**

(57) One embodiment of a method of operating an electrochemical cell system (32) comprises: flowing supply water to an anode electrode (75) of an electrolysis cell, applying a first current density to the electrolysis cell, electrolyzing the supply water at the anode (14) electrode (77) wherein hydrogen ions and a first portion water (22) migrate to a cathode electrode (75) of the electrolysis cell (32), collecting the first portion of water (22) in a chamber (108) in fluid communication with the cathode electrode (75), monitoring a first portion water (22) level in the chamber (108), when the first portion water (22) level attains a first selected level, decreasing the supply water flow to the anode electrode (77) a sufficient amount to draw the first portion water (22) from the chamber (108) to the anode electrode (77), and electrolyzing the first portion water (22).

FIG. 2

**Description**

CROSS REFERENCE TO RELATED APPLICATION

This non-provisional application claims the benefit of the filing date of Provisional Patent Application No. 60/379,448 filed May 10, 2002, and Provisional Patent Application No. 60/319,549, filed September 13, 2002, both of which are hereby incorporated by reference in its entirety.

BACKGROUND

This disclosure relates to electrochemical cells, and, more particularly, to an electrolysis system capable of high pressure operation.

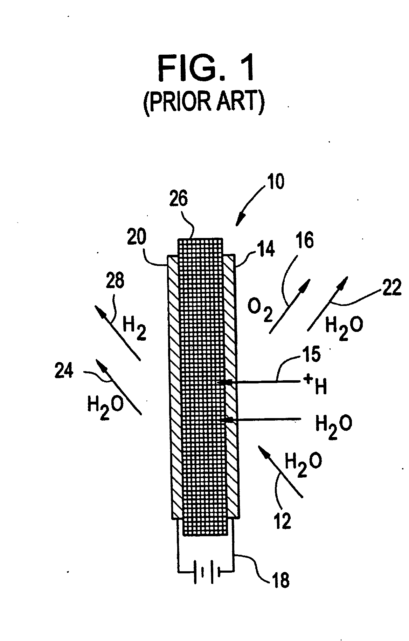

Electrochemical cells are energy conversion devices that are usually classified as either electrolysis cells or fuel cells. Proton exchange membrane electrolysis cells can function as hydrogen generators by electrolytically decomposing water to produce hydrogen and oxygen gases. Referring to Figure 1, a section of an anode feed electrolysis cell of the related art is shown at 10 and is hereinafter referred to as "cell 10." Reactant water 12 is fed to cell 10 at an oxygen electrode (anode) 14 where a chemical reaction occurs to form oxygen gas 16, electrons, and hydrogen ions (protons) 15. The chemical reaction is facilitated by the positive terminal of a power source 18 connected to anode 14 and a negative terminal of power source 18 connected to a hydrogen electrode (cathode) 20. Oxygen gas 16 and a first portion 22 of the water are discharged from cell 10, while protons 15 and a second portion 24 of the water migrate across a proton exchange membrane 26 to cathode 20. At cathode 20, hydrogen gas 28 is formed and is removed for use as a fuel or a process gas. Second portion 24 of water, which is entrained with hydrogen gas, is also removed from cathode 20.

Another type of water electrolysis cell that utilizes the same configuration as is shown in Figure 1 is a cathode feed cell. In the cathode feed cell, process water is fed on the side of the hydrogen electrode. A portion of the water migrates from the cathode across the membrane to the anode. A power source connected across the anode and the cathode facilitates a chemical reaction that generates hydrogen ions and oxygen gas. Excess process water exits the cell at the cathode side without passing through the membrane.

Electrochemical cell systems generally include one or more individual cells arranged in a stack, with the working fluids directed through the cells via input and output conduits formed within the stack structure. The cells within the stack are sequentially arranged, each including a membrane electrode assembly (hereinafter "MEA") defined by the cathode, the proton exchange membrane, and the anode. Each cell typically further comprises a first flow field in fluid communication with the cathode and a second flow field in fluid communication with the anode. The MEA may be supported on either or both sides by flow field support members such as screen packs or bipolar plates disposed within the flow fields, and which may be configured to facilitate membrane hydration and/or fluid movement to and from the MEA. Because a differential pressure often exists across the MEA during operation of the cell, pressure pads or other compression means are employed to maintain uniform compression of the cell components, thereby maintaining intimate contact between flow fields and cell electrodes over long time periods.

While existing electrolysis cells are suitable for their intended purposes, there still remains a need for an improved apparatus and method of electrolyzing water to produce hydrogen gas for use in a hydrogen-powered application such as a fuel cell.

SUMMARY

Disclosed herein is an electrolysis system and a method of operating an an electrochemical cell system. One embodiment of the method of operating the electrochemical cell system comprises: flowing supply water to an anode electrode of an electrolysis cell, applying a first current density to the electrolysis cell, electrolyzing the supply water at the anode electrode wherein hydrogen ions and a first portion water migrate to a cathode electrode of the electrolysis cell, collecting the first portion of water in a chamber in fluid communication with the cathode electrode, monitoring a first portion water level in the chamber, when the first portion water level attains a first selected level, decreasing the supply water flow to the anode electrode a sufficient amount to draw the first portion water from the chamber to the anode electrode, and electrolyzing the first portion water.

One embodiment of the electrolysis system comprises: an electrolysis cell comprising a fluid accumulation chamber disposed in fluid communication with a cathode side of the electrolysis cell, a gravity feed water source disposed in fluid communication with an anode side of the electrochemical cell, a control valve disposed upstream of the electrolysis cell and downstream of the water source, and a level sensing unit disposed in the fluid accumulation chamber, wherein the level sensing unit is in operable communication with a power source and the control valve, and wherein the power source is in operable communication with the electrolysis cell.

BRIEF DESCRIPTION OF THE DRAWINGS

Refer now to the drawings, which are meant to be exemplary and not limiting, and wherein like elements are numbered alike in the several Figures.

Figure 1 is a schematic representation of a prior art anode feed electrolysis cell.

Figure 2 is a schematic representation of one embodiment of a high pressure electrolysis system.

Figure 3 is a perspective view of one embodiment of a water source, a phase separator, a control valve, and a cell gravity fed by the water source.

Figure 4 is an exploded schematic representation of one embodiment of a high pressure electrolysis cell.

Figure 5 is an exploded schematic view of one embodiment of a hydrogen flow field structure.

Figure 6 is a sectional view of one embodiment of a water/hydrogen chamber of a high pressure electrolysis cell.

Figure 7 is a perspective view of one embodiment of a level sensing unit.

Figure 8 is a flow chart of one embodiment of a system for controlling anode and cathode feed operation.

Figure 9 is a schematic representation of one embodiment of an anode-cathode feed high pressure electrolysis cell.

DETAILED DESCRIPTION

Disclosed herein is an electrochemical cell, a cell system, and a method of operating the electrochemical cell system. The cell comprises electrodes disposed at opposing surfaces of a proton exchange membrane. This cell design is capable of high pressure (e.g., greater than or equal to about 2,400 pounds per square inch (psi)) electrolysis of water. For example, the cell can generate and withstand operating pressures of up to and exceeding about 2,400 psi. This system, which is capable of anode and cathode feed electrolysis, can attain operating pressure without the use of pumps, compressors, or the like. During operation, water is fed to the anode of the cell. Upon electrolysis of the water fed to the anode, hydrogen and some water is accumulated at the cathode of the cell. Upon filling of a fluid accumulation chamber at the cathode, the water feed to the anode is stopped or reduced, and the pressure of the hydrogen is utilized to drive the water accumulated in the fluid accumulation chamber back through the proton exchange membrane, thereby causing further electrolysis.

Although the disclosure below is described in relation to a proton exchange membrane electrochemical cell employing hydrogen, oxygen, and water, other types of electrochemical cells and/or electrolytes may be used, including, but not limited to, phosphoric acid, and the like. Various reactants can also be used, including, but not limited to, hydrogen, bromine, oxygen, air, chlorine, iodine, and the like. Upon the application of different reactants and/or different electrolytes, the flows and reactions change accordingly depending upon the particular type of electrochemical cell. Furthermore, while the discussion below is directed to an electrolysis cell in which either the anode or cathode may be fed with reactant water, it should be understood by those of skill in the art that fuel cells and regenerative fuel cells (combinations of electrolysis and fuel cells) are also within the scope of the embodiments disclosed.

An electrochemical cell comprises a membrane electrode assembly having a proton exchange membrane, a cathode disposed at a first side of the proton exchange membrane, and an anode disposed at a second side of the proton exchange membrane, and a water/hydrogen chamber disposed at the cathode. The water/hydrogen chamber is configured to receive water through the proton exchange membrane and to receive hydrogen gas and to utilize a pressure of the hydrogen gas to drive the water back through the proton exchange membrane. A level sensing unit may be disposed at the water/hydrogen chamber to detect a level of water in the water/hydrogen chamber. The level sensing unit may comprise at least two probes disposed in electrical communication with each other. A hydrogen flow field may be disposed intermediate the water/hydrogen chamber and the cathode. The hydrogen flow field may comprise a frame having a lip extending about a periphery of the frame and a support ring disposed at an inner peripheral surface of the lip of the frame. The support ring preferably defines a boundary of the hydrogen flow field. A fluid outlet may be disposed at the water/hydrogen chamber. The fluid outlet may be disposed in fluid communication with a hydrogen-powered application. A vent may also be disposed at the water/hydrogen chamber.

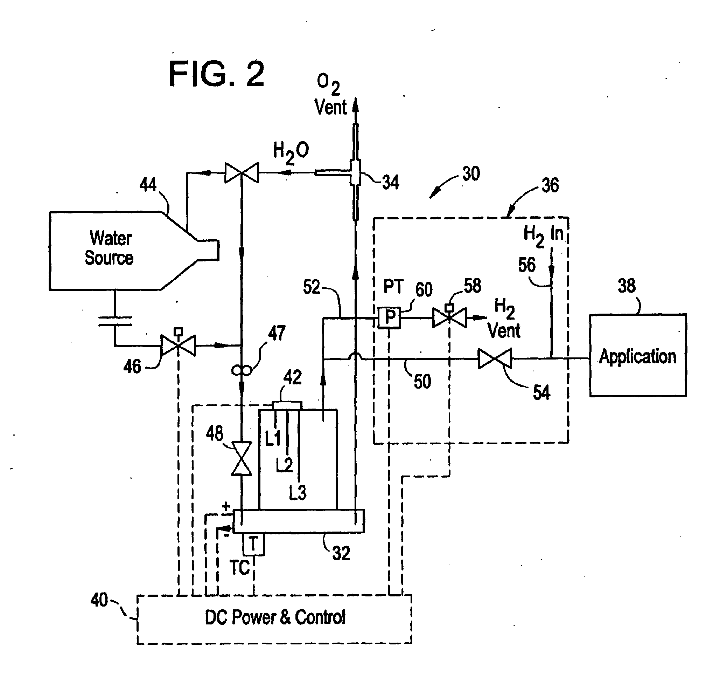

Referring to Figure 2, one embodiment of a high pressure electrolysis system that utilizes gravimetric means to allow water to flow to the cell is shown at 30 and is hereinafter referred to as "system 30." System 30 provides for a cell integrated with a fluid storage arrangement in which high operating pressures may be achieved without the use of pumps or compressors. In some embodiments, the power input is about 1.48 volts to about 3.0 volts, with current densities being about 50 A/ft$^2$ (amperes per square foot) to about 4,000 A/ft$^2$.

System 30 comprises a cell/fluid storage unit 32, hereinafter referred to as "cell 32," a water source (e.g., a vessel 44) that supplies a gravity-fed water stream to cell 32, a phase separation unit 34 disposed in fluid communication with cell 32, and a hydrogen gas outlet 36 from which hydrogen gas can be supplied to an application 38. A control/power unit 40 comprising a power source in electrical communication with cell 32 and a controller in operational communication with various valves, sensors, and system 30 components supplies power to cell 32, as well as to various components associated with system 30, and controls the operation of system 30. The various controls and sensors associated with system 30 include, but are not limited to, valves, transmitters and controllers (e.g., temperature, pressure, flow, level, and the like), and sensors (e.g., level, pressure, temperature, flow, and the like). Optionally, a pump 47 may be used to increase water flow through the cell to aid in the removal of oxygen gas.

Cell 32 comprises at least one membrane electrode assemby (not shown) and a level sensing unit 42. Level sensing unit 42 is disposed within the fluid storage reservoir of cell 32 and is configured to sense the collection of water at the cathode. Water is fed to cell 32 via vessel 44, which is preferably a collapsible container that allows water to be supplied to cell 32 in batches. Optionally, to avoid the need for pumps, vessel 44 comprises a drain at a lower end thereof so as to rely upon a gravity feed to cell 32. Fluid communication is maintained between vessel 44 and cell 32 through an optional control valve 46. A check valve 48, as well as various sensors and controllers, may also be disposed intermediate an outlet of control valve 46 and an inlet of cell 32 to prevent the backflow of fluids from cell 32. Phase separation unit 34 is disposed in fluid communication with cell 32 to receive excess water not consumed in the electrolysis operation.

Hydrogen gas outlet 36 is disposed at an outlet of cell 32 and comprises a supply line 50 and a vent line 52. Supply line 50 is in fluid communication with application 38, which may be, for example, a fuel cell. As with the other components of system 30, various sensors, valves, and controllers can be employed in hydrogen gas outlet 36. For example, a check valve 54 is preferably disposed within supply line 50 intermediate application 38 and cell 32 to prevent the backflow of hydrogen gas from application 38 to cell 32. A drying apparatus (not shown; e.g., a swing pressure dryer, an adsorption column, dessicant, or the like) may also be incorporated into supply line 50. Additionally, an auxiliary fill port 56 may be optionally disposed in fluid communication with supply line 50 intermediate application 38 and check valve 54. Auxiliary fill port 56 may be utilized to supplement the hydrogen gas supply to application 38, or it may allow system 30 to be interconnected with any other type of hydrogen generation system to supply single or multiple applications. Vent line 52 preferably comprises a vent device 58 through which hydrogen gas may be vented from cell 32 and a pressure sensor/transmitter 60. Although vent device 58 may be a rupture disk, vent device 58 is preferably a vent valve controllable in response to a pressure sensed at cell 32 by the sensor portion of sensor/transmitter 60.

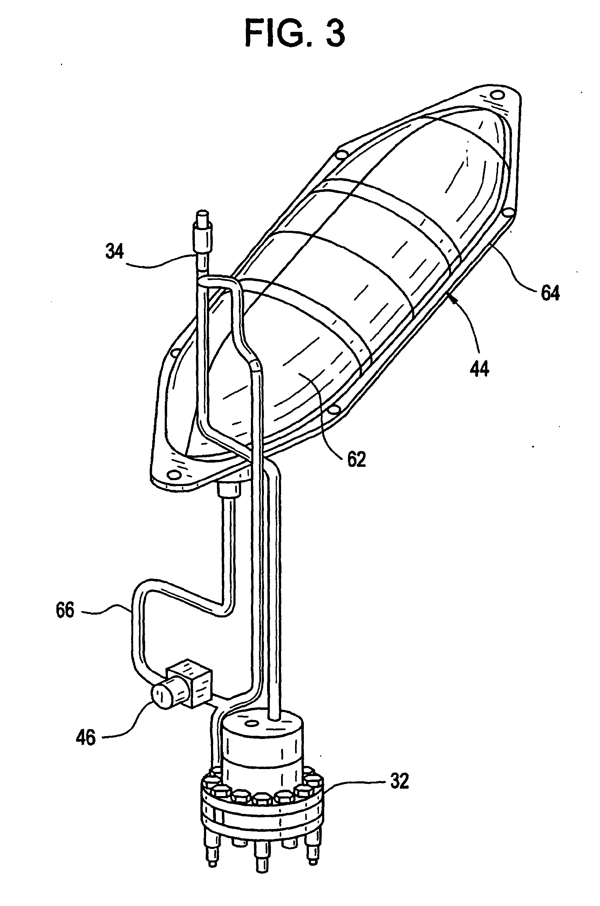

Referring now to Figure 3, an embodiment of the arrangement of vessel 44, phase separation unit 34, control valve 46, and cell 32 is shown. Although cell 32 may be directly and continuously supplied with water, vessel 44 is preferably a modular unit that allows water to be supplied to cell 32 in batches, thereby enabling the quality of each batch to be ascertained prior to its being fed to cell 32. A drain line 66 receives the water from vessel 44 and directs the water through control valve 46 to cell 32. Cell 32 and control valve 46 may be disposed within a housing (not shown). Phase separation unit 34 can be mounted so as to be at a higher elevation than cell 32 (and optionally vessel 44) in order to effect the gravity draining of water from phase separation unit 34 back to cell 32 (or optionally vessel 44).

Vessel 44 preferably comprises a collapsible material 62 (e.g., a bag, bladder, membrane, or the like) disposed within a frame 64. Frame 64 is preferably mounted at an angle with respect to drain line 66 through which water is removed from vessel 44. Alternately, vessel 44 may simply be a rigid structure or a rigid structure with a movable divider disposed therein. Vessel 44 may further include a filter disposed at an outlet to remove contaminants or particulate matter from the water as it is fed from vessel 44. Cell 32 may also receive a continuous water supply.

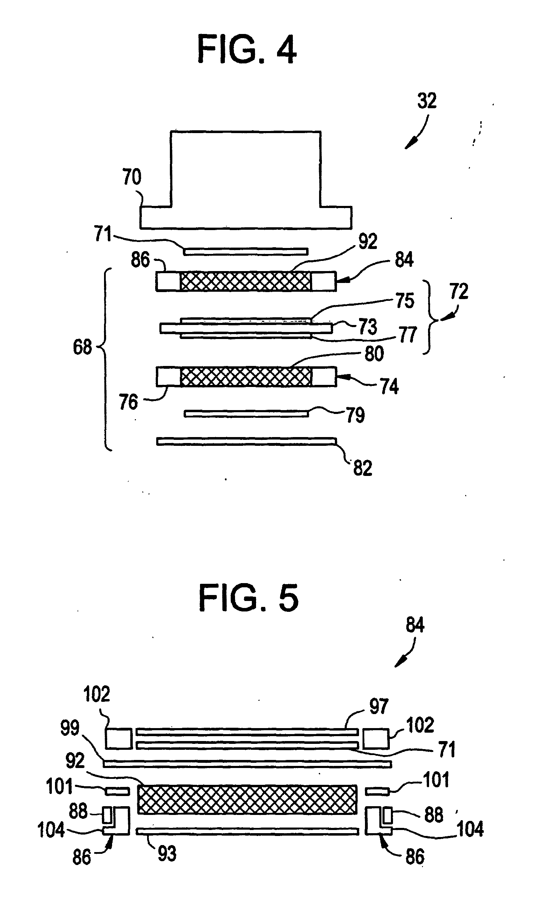

Referring now to Figures 4 through 6 where cell 32 is shown in greater detail. Cell 32 comprises a body 68 and a head 70. Body 68 forms the actively operational component of cell 32 and comprises a hydrogen flow field structure 84, a membrane electrode assembly 72 (MEA 72) comprising a proton exchange membrane 73 and electrodes 75, 77 disposed at opposing sides of proton exchange membrane 73, an oxygen flow field structure 74, and an end plate 82. Body 68 is connected to head 70 via any suitable means, such as, for example, bolts, clamps, and the like.

Hydrogen flow field structure 84 comprises a frame 86 and a hydrogen flow field member 92 disposed within frame 86. A pressure pad 71 may optionally be disposed at hydrogen flow field structure 84 intermediate hydrogen flow field member 92 and head 70. Oxygen flow field structure 74 comprises a frame 76 and an oxygen flow field member 80 disposed within frame 76. A pressure pad 79 may optionally be disposed intermediate oxygen flow field structure 74 and end plate 82. Flow field members 80, 92 may be screen packs, bipolar plates, or the like. Frames 76, 86 can be any dielectric material that is compatible with the electrochemical cell environment. Possible frame materials include, but are not limited to, glass-filled polycarbonates, thermosets, thermoplastics, rubber materials (e.g., polyetherimide, polysulfone, polyethersulfone, polyarylether ketone, combinations of the foregoing materials, and the like), and mixtures comprising at least one of the foregoing materials.

In one exemplary embodiment of hydrogen flow field structure 84, shown with reference to Figure 5, hydrogen flow field structure 84 comprises frame 86, a support ring 88 disposed at frame 86 and hydrogen flow field member 92, and a porous plate 93 disposed within the opening of frame 86. Frame 86 preferably includes a lip 104 extending about the periphery of frame 86 at one side thereof. Lip 104 is configured and dimensioned to receive and retain support ring 88 and to structurally support frame 86 upon the exertion of forces (e.g., pressure) in the directions outward from hydrogen flow field member 92. Support ring 88 is preferably fabricated from metal and is more preferably fabricated from steel.

A buss plate 99 may be disposed adjacent to hydrogen flow field member 92. A gasket 101 can also be disposed at the juncture of support ring 88 and frame 86 between buss plate 99 and the assembled support ring 88 and frame 86 to effectively retain hydrogen flow field member 92 between frame 86, porous plate 93, and buss plate 99. An optional perforated plate 97 may be disposed adjacent to pressure pad 71 on the side of buss plate 99 opposite hydrogen flow field member 92. A gasket 102 (which may be, for example, an o-ring) enables a seal to be maintained between the head and hydrogen flow field structure 84. As stated above, the end plate, the oxygen flow field structure, the MEA, and hydrogen flow field structure 84 can be connected to head 70 via a bolt, a clamp, or the like.

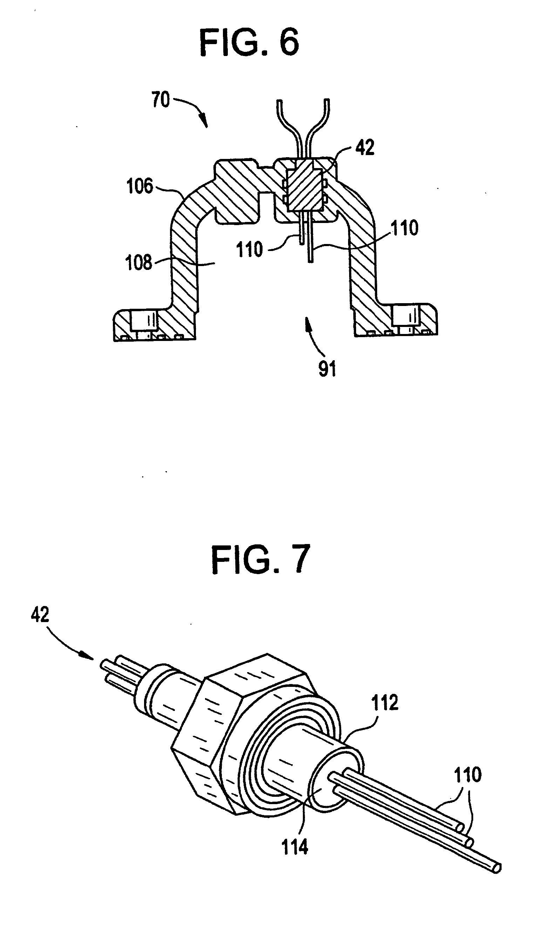

Referring to Figure 6, head 70 is shown in greater detail. Head 70 comprises a shell 106 having a fluid accumulation chamber, e.g., a water/hydrogen chamber 108, defined therein. Water/hydrogen chamber 108 is a pressure chamber that operates as a phase separation unit that is integral with the operative body portion of the electrochemical cell and is configured to retain water and hydrogen gas at operating pressures. An open side 91 of shell 106 defining water/hydrogen chamber 108 can be positioned against the hydrogen flow field structure and bolted to the body of the cell such that hydrogen generated during the electrolysis of water (as well as any residual water) can be received in water/hydrogen chamber 108.

Level sensing unit 42 can be mounted within shell 106 such that probes 110 of varying lengths extend into water/hydrogen chamber 108 perpendicular to the level of water in water/hydrogen chamber 108. As the water level rises in water/hydrogen chamber 108, an electrical short is created between probes 110, thereby indicating the level of water in water/hydrogen chamber 108.

Level sensing unit 42 is shown in greater detail with reference to Figure 7. Level sensing unit 42 provides feedback to the control/power unit via at least two probes extending from a fitting 112 mounted in an opening in the shell. Each probe 110, three of which are shown, comprises an electrically conductive material that extends into the water/hydrogen chamber of the shell. Level sensing unit 42 operates by the detection of an electrical short caused when the water level in the shell contacts any two probes 110. Varying levels of water can be detected by varying the lengths of probes 110. For example, as a rising water level engages a long probe 110 and a medium length probe 110, the control/power unit detects an electrical short that indicates a corresponding water level. As the water level rises to engage a shorter probe 110, the control/power unit detects an electrical short that indicates a different corresponding water level.

Fitting 112 can comprise a seal 114 through which probes 110 are inserted. The material from which seal 114 is manufactured is preferably such that the hydrogen environment of the head can be hermetically sealed from the environment adjacent to the cell and such that long-term joint stability between probes 110 and the integrity of seal 114 can be maintained. Preferably, seal 114 is fabricated from borosilicate glass, and more preferably alumino-borosilicate glass. Other materials from which seal 114 may be fabricated include ceramic, glass, epoxy, VITON® (a fluoroelastomer commercially available from DuPont Dow Elastomers L.L.C.), adhesive, a combination of epoxy and VITON®, and the like, as well as a combination comprising at least one of the foregoing materials.

Probes 110 can comprise any electrically conductive material compatible with the operating environment of the cell. Possible materials include metals such as copper, iron, ferrous materials (e.g., steel), silver, nickel, cobalt, titanium, and the like, as well as alloys and combinations comprising at least one of the foregoing materials. Probes 110 are preferably fabricated of an iron/nickel/cobalt alloy (e.g., an alloy comprising about 45% to about 55% iron (Fe), about 43% to about 53% nickel (Ni), and less than or equal to about 7% cobalt (Co) (such as about 0.5% to about 7% Co)) brazed at an end thereof to an end of a stainless steel pin (e.g., 316 stainless steel). The braze material is preferably silver (Ag) and/or copper (Cu), and the braze is preferably disposed within seal 114 to limit or prevent the contamination of the cell with the braze material. Other materials from which probes 110 can be fabricated include, the foregoing listed materials plated with Ni and/or gold (Au), and the like, as well as combinations comprising at least one of the above listed materials.

Referring now to all the Figures, operation of system 30 is initiated by the gravity feed of water from the water source 44 to cell 32 at the anode side of proton exchange membrane 73. Once water is received into cell 32, subjected to an electric current, and reduced to hydrogen ions and oxygen. The hydrogen ions pass through the proton exchange membrane 73 to the cathode electrode of the cell while the oxygen is removed from the cell and, for example, vented to the atmosphere. As the water at the cathode side of the cell accumulates, level sensing unit 42 detects the level of water and transmits a water level signal to control/power unit 40. When a predetermined level of water has been detected, control/power unit 40 signals optional control valve 46 and/or pump 47 to stop or restrict the flow of water to the anode (e.g., by closing at least partially or closing fully).

Once the manipulation of control valve 46 and/or pump 47 causes the flow of water to the anode side of the cell to either stop or slow down, the direction of the flow of water is reversed and the cell is fed from the cathode. In the cathode feeding of the cell, it is believed that the pressure at the cathode side of the proton exchange membrane forces the accumulated water back through the proton exchange membrane to the anode, causing further electrolysis. The amount of water electrolyzed (and hydrogen generated) is a function of the current density applied to the cell. The system can optionally use the same current density in both anode and cathode feed modes. Due to the highly complex and dynamic reactions that take place during cathode feed mode, when operated in this manner, it has been found that the membrane is subjected to an undesirable and irreversable drying condition.

Under liquid anode feed operating conditions, water is carried along with hydrogen ions through the membrane during electrolysis. This extra water provides a benefit of maintaining the hydration state of the membrane and prolonging its life. Since water is being transported to the electrode from outside the membrane electrolysis will continuously occur under a constant supply water condition. However, when the electrochemical cell is switched into a cathode feed mode, the mechanism of the reaction changes. As described above, cathode feed mode takes place when water flow to the anode electrode is stopped. Once the water immediately adjacent to the anode electrode is electrolyzed, the anode electrode will start to consume water from the cathode side.

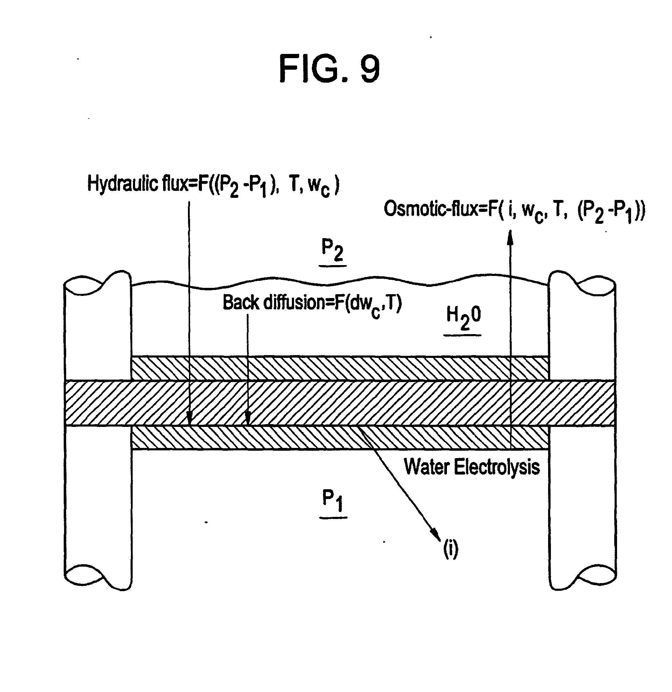

As shown in Figure 9, there are two forces acting on the cathode water that will tend to drive it to the anode electrode: 1) back diffusion, and 2) hydraulic flux. The back diffusion phenomena is due to the characteristics of the membrane material which< in its natural state, wants to remain hydrated with a high water content ($w_c$). As will be discussed below, cathode feed electrolysis tends, to some varying degree, to dry the membrane as water is consumed within the membrane. This consumption further enhances the back-diffusion activity. The second phenomena, hydraulic flux, occurs due to the pressure differential between the two sides of the cell. When a large pressure differential conditional exists, such as when the hydrogen gas on the cathode side is greater than or equal to about 2,000 psi, with the anode side being at ambient pressure, the pressure differential acts to force the water back through the membrane under hydraulic pressure. While the hydraulic flux will be present any time there is a pressure differential, in very high differential applications, the hydraulic flux will be the dominant mode for transporting water back across the membrane.

Since current is still being applied to the cell, electrolysis will continue. However, the water now being electrolyzed is provided via the back diffusion and hydraulic flux within the membrane rather than on the surface adjacent anode flow field. Thus, as the water molecule reaches the anode electrode, the molecule is disassociated, with the oxygen continuing on into the anode flow field and the hydrogen ion reversing direction to migrate back to the cathode side of the cell. Due to electro-osmotic flux, some water molecules will also be dragged back with the hydrogen ions through the membrane. This has the effect of preventing some of the water being driven by hydraulic flux from reaching the anode electrode and being electrolyzed. At high current density operation, the combination of the required reactant water for electrolysis and electo-osmotic flux will be greater that the water being migrating from the cathode. Under these conditions, cathode feed electrolysis will continue, but will reduce the amount of water within the membrane and cause irreversible drying of the membrane. This drying of the membrane shortens the expect life of the electrolysis cell. The drying will be most noticable on the membrane surface adjacent to the anode electrode. The amount of water molecules disassociated and the amount of drying that occurs is directly proportional to the current density and the pressure differential between the two sides of the cell.

To eliminate the drying and achieve a long life for the membrane, the amount of water diffused by the pressure differential should be balanced with the current density during cathode feed mode. As shown in Figure 9, the ideal water balance at the anode electrode would be:

$$\text{Hydraulic Flux} + \text{Back diffusion} \geq \text{Electro-osmotic flux} + \text{Water electrolysis}$$

In other words, the water driven back through the membrane would be greater than or equal to the water pulled by electro-osmotic flux plus the water consumed by the electrolysis reaction. By maintaining this condition, a longer life is attained while maximizing hydrogen production. To achieve this, the control system 40 was modified such that when the pump 47 is disabled, or control valve 46 is closed (which occurs only in cathode feed mode), the current density for electrolysis is reduced. In the exemplary embodiment, the water is electrolyzed at 500 amperes per square foot (asf) in anode feed and reduced to 200 asf in cathode feed. In addition, by operating at a reduced current density, electrolysis continues, allowing hydrogen gas to be produced while extending the life of the electrolysis cell.

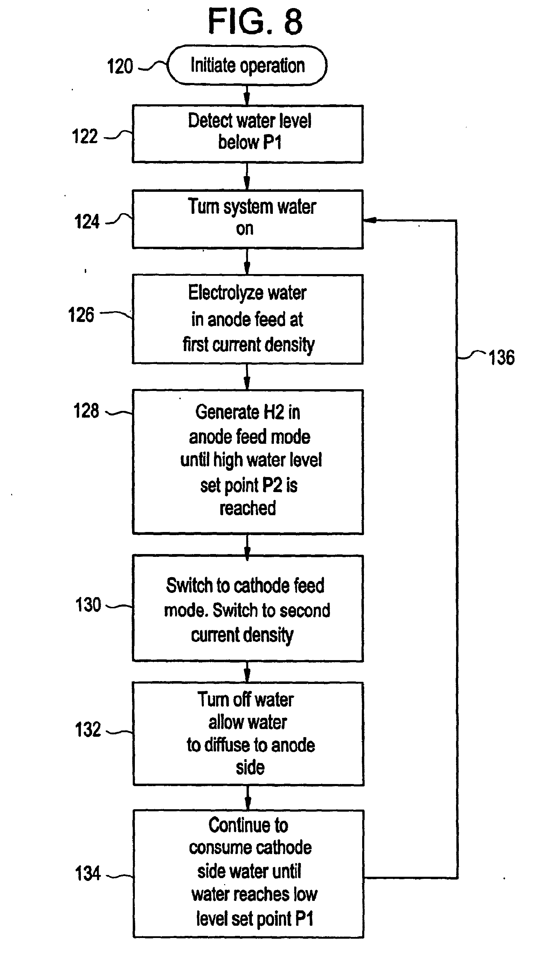

Figure 8 illustrates the control logic in switching from anode to cathode feed electrolysis. Operation is initialized at box 120, and a level sensing unit 42 (see also Figure 2) detects a predetermined low water level (e.g., at or below P1). To enable anode feed electrolysis, the water is turned on (e.g., either the optional pump 47, and/or optional control valve 46 are enabled) allowing water to flow to the anode electrode (box 124) where the water is electrolyzed in box 126. The water continues to be electrolyzed until the predetermined water level is detected by level sensing unit 42. To switch to cathode feed, the current density is reduced in box 130 and the water flow is ceased (or at least restricted to a sufficent amount to consume water from the cathode electrode side of the cell) in box 132. It should be appreciated that, while the actions in boxes 130 and 132 are shown serially, they may also occur simultaniously. Water from the cathode is consumed until the the level sensing unit 42 detects a predetermined low water level (e.g., a level of less than or equal to P1), the control system 40 then loops back via 136 to box 124 to resume the flow of water to the anode electrode.

The above-described electrochemical cell and its exemplary embodiments provide for the operation of an electrolysis system at higher pressures than those achievable with other electrolysis systems. Such higher pressures can be achieved without the use of pumps or compressors. Furthermore, by alternating the direction of feed water to the cell to define a combination anode/cathode feed cell, the cell can be operated more efficiently.

The use of a gravity-fed water system reduces the amount of space required for the system by eliminating, or reducing the size of a feed pump. Furthermore, for system applications in which the water supply is not continuous, the modularity of the vessel provides a supply of contaminant free feed water. Moreover, the collapsibility feature of the water vessel permits gravity feed without the need to vent the vessel, thereby eliminating the need to filter the gas vented from the vessel. Additionally, longer life and higher hydrogen gas output may be achieved by applying a different current density to anode and cathode feed electrolysis.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the disclosure.

**Claims**

1.  A method of operating an electrochemical cell system (30), comprising:

    flowing supply water to an anode electrode (77) of an electrolysis cell (72);
    applying a first current density to the electrolysis cell;
    electrolyzing the supply water at the anode electrode (77) wherein hydrogen ions and a first portion water migrate to a cathode electrode (20) of the electrolysis cell (72);
    collecting the first portion of water (22) in a chamber (108) in fluid communication with the cathode electrode (75);
    monitoring a first portion water (22) level in the chamber (108);
    when the first portion water (22) level attains a first selected level, decreasing the supply water flow to the anode electrode (77) a sufficient amount to draw the first portion water (22) from the chamber (108) to the anode electrode (77); and
    electrolyzing the first portion water (22).

2.  The method of Claim 1, further comprising increasing the supply water flow to the anode electrode (77) when the first portion water (22) level decreases to a second selected level.

3.  The method of Claim 2, further comprising decreasing a current density applied to the electrolysis cell (32) when the first portion water (22) level attains the first selected level.

4.  The method of Claim 3, further comprising decreasing the current density until a hydraulic flux plus a back diffusion are greater than or equal to an electro-osmotic flux plus water electrolysis.

5.  The method of Claim 1, further comprising decreasing a current density applied to the electrolysis cell (32) when the first portion water (22) level attains the first selected level.

6.  The method of Claim 5, further comprising decreasing the current density until a hydraulic flux plus a back diffusion are greater than or equal to an electro-osmotic flux plus water electrolysis.

7.  The method of Claim 1, further comprising ceasing the supply water flow when the first portion water (22) level attains the first selected level.

8.  The method of Claim 1, wherein flowing the supply water to the anode electrode (77) is solely with gravity water feed (44).

9.  An electrolysis system (30), comprising:

    an electrolysis cell (32) comprising a fluid accumulation chamber (108) disposed in fluid communication with a cathode side of the electrolysis cell (32);

a gravity feed water source (44) disposed in fluid communication with an anode (14) side of the electrolysis cell (32);

a control valve (46) disposed upstream of the electrolysis cell (32) and downstream of the water source (44); and

a level sensing unit (42) disposed in the fluid accumulation chamber (108), wherein the level sensing unit (42) is in operable communication with a power source (18) and the control valve (46), and wherein the power source (18) is in operable communication with the electrolysis cell (32).

10. The electrolysis system of Claim 9, wherein all pumps (47) and compressors are disposed downstream of the electrolysis cell (32).

# FIG. 1
## (PRIOR ART)

FIG. 2

EP 1 396 558 A1

# FIG. 3

# FIG. 4

# FIG. 5

# FIG. 6

# FIG. 7

# FIG. 8

120 — ( Initiate operation )

122 — **Detect water level below P1**

124 — **Turn system water on**

126 — **Electrolyze water in anode feed at first current density**

136

128 — **Generate H2 in anode feed mode until high water level set point P2 is reached**

130 — **Switch to cathode feed mode. Switch to second current density**

132 — **Turn off water allow water to diffuse to anode side**

134 — **Continue to consume cathode side water until water reaches low level set point P1**

# FIG. 9

Hydraulic flux=$F((P_2 - P_1), T, w_c)$

Osmotic-flux=$F(i, w_c, T, (P_2 - P_1))$

$\underline{P_2}$

Back diffusion=$F(dw_c, T)$

$\underline{H_2 0}$

Water Electrolysis

$\underline{P_1}$

(i)

**European Patent Office**

**EUROPEAN SEARCH REPORT**

Application Number

EP 03 01 0453

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 657 829 A (MCELROY JAMES F ET AL) 14 April 1987 (1987-04-14) * column 5, line 2 - line 36; figure 2 * | 1,2,7 | C25B15/00 C25B9/08 C25B9/00 C25B1/10 C25B1/12 C25B1/00 C25B15/08 C02F1/78 |
| A | | 9,10 | |
| X | US 6 036 827 A (ANDREWS CRAIG C ET AL) 14 March 2000 (2000-03-14) * figure 1 * * column 9, line 17 - column 10, line 34 * * column 10, line 35 - line 58 * * column 11, line 62 - column 12, line 6 * * column 20, paragraph 2 * * column 21, line 9-16 * * column 26, line 16-34 * | 1-6,8 | |
| A | | 9,10 | |
| X | US 5 690 797 A (HIRAI KIYOSHI ET AL) 25 November 1997 (1997-11-25) * figure 4 * * column 17, line 62 - column 18, line 19 * * column 18, line 50 - column 19, line 52 * * column 20, line 27 - column 21, line 3 * | 1,2,7 | |
| A | | 9,10 | TECHNICAL FIELDS SEARCHED (Int.Cl.7) C25B C02F |
| A | EP 0 995 818 A (HYDROGEN SYSTEMS NV) 26 April 2000 (2000-04-26) * paragraph [0043]; figure 4 * | 8,9 | |
| A | WO 00 70262 A (STUART ENERGY SYS CORP) 23 November 2000 (2000-11-23) * page 13, line 7-22; figure 5 * | 1,9 | |

The present search report has been drawn up for all claims

| Place of search | Date of completion of the search | Examiner |
|---|---|---|
| MUNICH | 15 January 2004 | Fitzpatrick, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 03 01 0453

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2004

| Patent document cited in search report | | | Publication date | Patent family member(s) | | Publication date |
|---|---|---|---|---|---|---|
| US 4657829 | A | | 14-04-1987 | CA 1214512 A1 | | 25-11-1986 |
| | | | | DE 3345956 A1 | | 28-06-1984 |
| | | | | GB 2133207 A ,B | | 18-07-1984 |
| | | | | JP 59139578 A | | 10-08-1984 |
| US 6036827 | A | | 14-03-2000 | AU 8168198 A | | 19-01-1999 |
| | | | | EP 1270765 A1 | | 02-01-2003 |
| | | | | EP 0991852 A2 | | 12-04-2000 |
| | | | | WO 9900588 A2 | | 07-01-1999 |
| US 5690797 | A | | 25-11-1997 | JP 3220607 B2 | | 22-10-2001 |
| | | | | JP 8193287 A | | 30-07-1996 |
| EP 0995818 | A | | 26-04-2000 | EP 0995818 A1 | | 26-04-2000 |
| | | | | AT 220125 T | | 15-07-2002 |
| | | | | AU 748527 B2 | | 06-06-2002 |
| | | | | AU 6339899 A | | 01-05-2000 |
| | | | | BR 9914416 A | | 26-06-2001 |
| | | | | CA 2350322 A1 | | 20-04-2000 |
| | | | | CN 1330731 T | | 09-01-2002 |
| | | | | CZ 20011312 A3 | | 13-03-2002 |
| | | | | DE 69902055 D1 | | 08-08-2002 |
| | | | | DE 69902055 T2 | | 27-02-2003 |
| | | | | DK 1133586 T3 | | 14-10-2002 |
| | | | | WO 0022191 A1 | | 20-04-2000 |
| | | | | EP 1133586 A1 | | 19-09-2001 |
| | | | | ES 2179681 T3 | | 16-01-2003 |
| | | | | HU 0103909 A2 | | 28-03-2002 |
| | | | | JP 2002527620 T | | 27-08-2002 |
| | | | | MD 20010202 A | | 31-01-2002 |
| | | | | NO 20011826 A | | 11-06-2001 |
| | | | | NZ 511053 A | | 28-08-2002 |
| | | | | PL 347222 A1 | | 25-03-2002 |
| | | | | PT 1133586 T | | 29-11-2002 |
| | | | | US 6554978 B1 | | 29-04-2003 |
| | | | | ZA 200102786 A | | 04-10-2002 |
| WO 0070262 | A | | 23-11-2000 | CA 2271450 A1 | | 12-11-2000 |
| | | | | AT 231955 T | | 15-02-2003 |
| | | | | AU 758045 B2 | | 13-03-2003 |
| | | | | AU 4281900 A | | 05-12-2000 |
| | | | | BR 0010507 A | | 13-02-2002 |
| | | | | WO 0070262 A1 | | 23-11-2000 |
| | | | | CA 2370026 A1 | | 23-11-2000 |
| | | | | CN 1109131 B | | 21-05-2003 |
| | | | | DE 60001321 D1 | | 06-03-2003 |

For more details about this annex : see Official Journal of the European Patent Office, No. 12/82

EPO FORM P0459

## ANNEX TO THE EUROPEAN SEARCH REPORT
## ON EUROPEAN PATENT APPLICATION NO.

EP 03 01 0453

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2004

| Patent document cited in search report | Publication date | Patent family member(s) | Publication date |
|---|---|---|---|
| WO 0070262 A | | DE 60001321 T2 | 27-11-2003 |
| | | DK 1194716 T3 | 23-06-2003 |
| | | EP 1194716 A1 | 10-04-2002 |
| | | ES 2186645 T3 | 16-05-2003 |
| | | JP 2002544397 T | 24-12-2002 |
| | | NO 20015414 A | 07-01-2002 |
| | | NZ 515268 A | 31-01-2003 |
| | | US 6432283 B1 | 13-08-2002 |
| | | ZA 200108895 A | 11-06-2002 |

For more details about this annex : see Official Journal of the European Patent Office, No. 12/82